# EUROPÄISCHE PATENTSCHRIFT

(11) **EP 3 758 469 B1**
(45) Veröffentlichungstag und Bekanntmachung des Hinweises auf die Patenterteilung: **19.04.2023**
(21) Anmeldenummer: 18800827.0
(22) Anmeldetag: 27.09.2018
(51) Int. Cl.: A01G 9/28, A01G 13/10, A01D 34/00, E04H 17/06

(54) **EINSCHLAGBARE MÄHKANTE**
MOWING EDGE THAT CAN BE DRIVEN IN
BORD DE FAUCHAGE POUVANT ÊTRE ENFONCÉ

(30) Priorität: 27.09.2017 AT 601012017
(43) Veröffentlichungstag der Anmeldung: 06.01.2021
(73) Patentinhaber: Jonser, Hubert, 8280 Fürstenfeld (AT)
(72) Erfinder: Jonser, Hubert, 8280 Fürstenfeld (AT)
(74) Vertreter: Vinazzer, Edith
(86) Internationale Anmeldenummer: PCT/AT2018/000080
(87) Internationale Veröffentlichungsnummer: WO 2019/060934

(56) Entgegenhaltungen:
- WO-A1-03/069976
- DE-U1- 9 209 237
- DE-U1- 20 120 406
- DE-U1-202010 008 097
- FR-A1- 2 565 063
- US-A- 3 495 352
- US-A1- 2002 189 162

## Beschreibung

Im Stand der Technik sind folgende Systeme für einschlagbare Mähkantenelemente offenbart:
DE 92 09 237 U1, FR 2 565 063 A1 und DE 201 20 406 U1.
DE 102009 011245 B3 Kunststoffmähkante
US 1.139.515 (18.5.1915, Border strip mit ankerähnlichen Ausnehmungen)
WO 2014/170029 A2 PCT 17.4.2014 (Priorität 17.4.2013)
DE 20 2012 103 070 U1 (20.12.2012) Gebrauchsmusterschrift (Begrenzungselement zur Abgrenzung zweier Flächenbereiche, Metall, andere Materialien)
DE 20 2011 105 260 U1 (10.5.2012) Gebrauchsmusterschrift (Steckverbindung, ist erloschen)
DE 79 06 039 U1 (05.03.1979), Einfassungselement für Gartenbeete, (Sägezähne, rechteckiger Querschnitt, Kunststoffhohlprofil)
US 3,676.952 (18.7.1972), "Dual-purpose lawn edging device", Sägezähne, Mähhilfe mit im Querschnitt schräger Anordnung der Mähkante
US 3,484,989 (23.12.1969) "Lawn edging strip", plastic material, (quasi Anker im längeren Arm des rechteckigen Querschnitts)
US 3,520,082 (14.7.1970) "Landscape edging and erosion control device", substantially rigid material, (Verankerungen und steckbar)
NL 7107836 (8.6.1971) "Gazonrand of dergelijke"; rechteckiges Kunststoffprofil, (ein Schenkel länger als der andere, polyesterverstärkt).
DE 297 13 019 U1 (23.7.1997) , "Vorrichtung zur Begrenzung von Rasen und zur Einfassung von Beeten, Bäumen, Sträuchern, Blumen etc."; (Sägezahnzinken, rechtwinkeliger Flansch, Nut-Feder-Verbindung der einzelnen Elemente)
CA 2,043,518 (29.5.1991) "Edge Cover" ; triangular tipp anchors on each side; (openings for anchor and holdings devices).
US 3,762,113 (13.07.1972 " Molded Plastic Landscape Edging and border structure"; (male and female ends and anchor structure).
US 5,048,241 (5.2.1990) "Lawn edging apparatus", polymeres Material, (mit montierbaren seitlichen Bodenhalterungen).

### Beschreibung

### (0001) Stand der Technik

Es ist Stand der Technik, dass es Mähkanten aus unterschiedlichen Materialien (Metall, Kunststoff, Beton uvm.) und in unterschiedlichen Ausführungen gibt (siehe die oben angeführten Offenlegungsschriften). Diese sind meist definiert vorgeformt und bedürfen teilweise massiver Aktivitäten für ihre Befestigung im Boden. So finden sie ihren Einsatz in durchaus verschiedenen Böden, jedoch müssen die meisten ihrer Art mittels separatem Erdanker, Dübel oder mit einem Unterbau aus Kies oder Beton mit einem erheblichen Aufwand montiert werden. Die in den Offenlegungsschriften beschriebenen und teilweise am Markt befindlichen Mähkanten aus Flachmetall oder anderen Werkstoffen sind teilweise mit Spitzen für das Einschlagen in das Erdreich versehen, aber diese lockern sich bei unterschiedlichen ungleichmäßigen Belastungen (beim Befahren oder Begehen) und bieten deshalb keinen festen Halt im Erdreich. Zudem eignen sie sich kaum für die Abgrenzung verschiedener Flächen gleichen Niveaus, wie dies bei der Nutzung von Mährobotern notwendig ist. Ebenso können kaum weitere Funktionalitäten wie Beleuchtung, Schneckenschutz etc. eingebaut werden.

### (0002) Zielsetzung der vorliegenden Erfindung

Zusammengefasst ist das Ziel der vorliegenden Erfindung die Realisierung einer beliebig verlängerbaren Mähkante durch die Verwendung von ineinander steckbaren Mähkantenelementen, die zusätzlich als Aufwuchsschutz im Bereich von Zäunen und als Abgrenzung von Grasflächen oder Beeten genutzt werden kann, ebenso als Abgrenzung von Baumscheiben und als Unterbau von Hochbeeten, und die mit geeigneten Vorrichtungen für eine stabile Befestigung im Boden ausgestattet ist, und zusätzlich praktisch werkzeuglos mit Anbauteilen für weitere Funktionalitäten wie Schneckenschutz ausgestattet werden kann. Ebenso soll die Länge der insgesamt verlegten Mähkante durch Randelemente werkzeuglos eingestellt werden.

### (0003) Allgemeine Beschreibung der verbesserten Mähkante, aufgebaut aus Mähkantenelementen

Die vorliegende Erfindung des einschlagbaren Mähkantenelements gemäß Anspruch 1 vermeidet u.a. die in den oben erwähnten Offenlegungsschriften sich ergebenden Nachteile einer aufwändigen Befestigung dadurch, dass Öffnungen in den in das Erdreich ragenden Seitenflächen angebracht sind, die es bei unterschiedlichen Bodenverhältnissen, zum Beispiel in Lehm, Sand, Kiesel oder kleinerem Schotter sowie in der Erde selbst ermöglichen, dass diese Materialien in die Öffnungen eingebracht werden und so bereits eine stabile Befestigung sichergestellt wird, zudem können auch Wurzeln aus dem umgebenden Bewuchs eindringen, die zu einer weiteren deutlichen Verbesserung der Trittfestigkeit und der Stabilität beitragen. Weiters sind in den seitlichen, nach unten orientierten Schenkeln der Mähkante zumindest zwei tannenbaumförmige, mit asymmetrisch angeordneten bzw. ausgelegten Widerhaken ausgeführte Befestigungselemente angebracht, die eine hervorragende Stabilität der Mähkante im Boden sicherstellen. Dadurch sind für die Funktionalität und Festigkeit keine zusätzlichen Anker-, Befestigungs- oder Sicherungsmaßnahmen notwendig.

Ferner wird ein Mähkantensystem gemäß Anspruch 10 offenbart, wobei die Mähkanten in Kombination mit erhöhten Randleisten bei z.B Beeten mit unterschiedlichen Niveaus oder als Schneckenschutz eingesetzt werden, wobei mittels einer einfachen Schraub- oder erfindungsgemäßen Steckverbindung diese Anbauteile mit dem Vorteil einer hohen Stabilität praktisch werkzeuglos montierbar sind.

Die Endstücke der Mähkante lassen sich der Länge nach verschieben, sodass insgesamt damit die Länge der miteinander verbundenen einschlagbaren Mähkantenelemente variierbar ist. Dies ist ein wesentlicher Vorteil im Vergleich zu bisher offengelegten Varianten von Mähkanten, da ein Kürzen mit einem Werkzeug (z.B. Trennscheibe) entfällt.

In Anspruch 13 wird eine Verwendung eines erfindungsgemäßen Mähkantenelements und in Anspruch 14 eine Verwendung eines erfindungsgemäßen Mähkantensystems offenbart.

### (0004) Ausnehmungen/Spifzen der einschlagbaren Mähkantenelemente

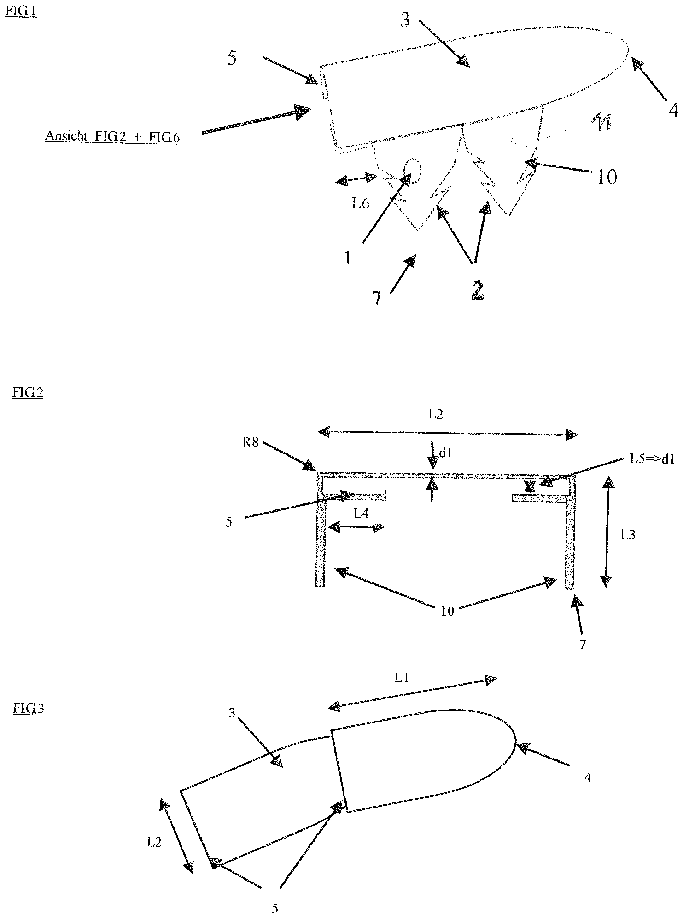

Das einschlagbare Mähkantenelement besteht aus einem ebenen horizontalen Teil mit nach unten ausgeführten senkrecht stehenden Seitenflächen (im Querschnitt ein umgekehrtes, oben offenes Rechteck), so dass die in das Erdreich einzutreibenden parallel zueinander stehenden Schenkelflächen (10) (Fig.1 ) mit den ankerförmigen Ausnehmungen (2) 90° mit einer Toleranz von +/-10 bis 15 Grad (Fig.2) zur Sichtfläche der fertig im Boden eingeschlagenen und damit fest montierten Mähkantenelements abgewinkelt sind. In den beiden zu einander parallel liegenden Schenkelflächen mit einer Länge (L3) von **30 mm** bis zu **150 mm,** bevorzugt mit einer Länge zwischen 45 mm und 55 mm, die in das Erdreich eingeschlagen werden, sind Öffnungen bzw. Ausnehmungen in runder (1) oder eckiger Form (11) oder wellenförmiger Form angebracht, deren Größe je nach Bodenverhältnis ausgelegt ist (Fig. 1) . Zudem sind die unteren Bereiche der im Boden liegenden Schenkelflächen in Form von asymmetrischen, tannenbaumförmigen Ankern (2) unterschiedlicher Dimensionierung ausgeführt. Zweck dieser erfindungsgemäß ausgeführten Öffnungen ist eine Verbesserung der Haftung bei unterschiedlichen Bodenverhältnissen wie zum Beispiel in Lehm, Sand, Kieselbett oder Erdbett, und die Schaffung der Möglichkeit des Einwachsens von Wurzeln aus dem umgebenden Bewuchs zwecks zusätzlicher Verbesserung der Stabilität.

### (0005) Verbindung mehrerer einschlagbarer Mähkantenelemente

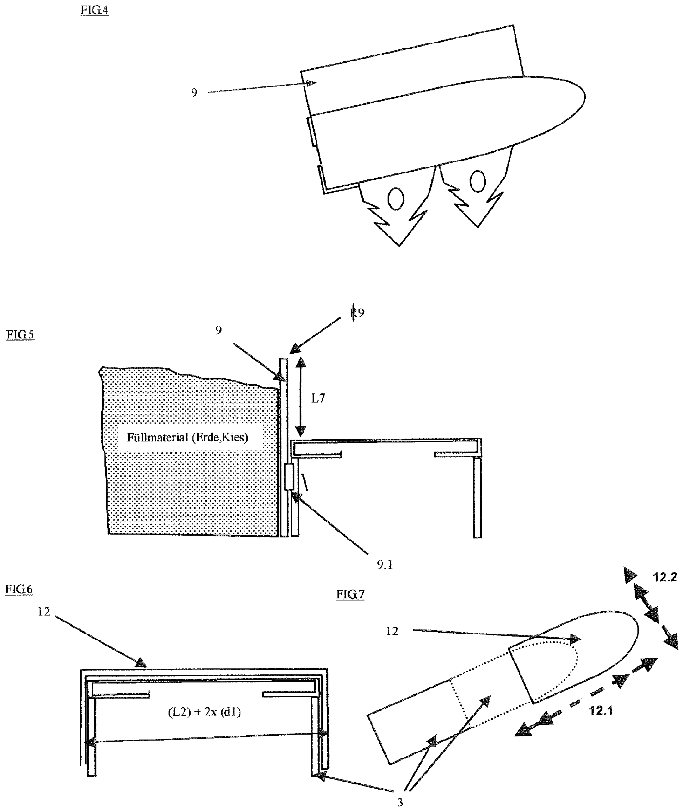

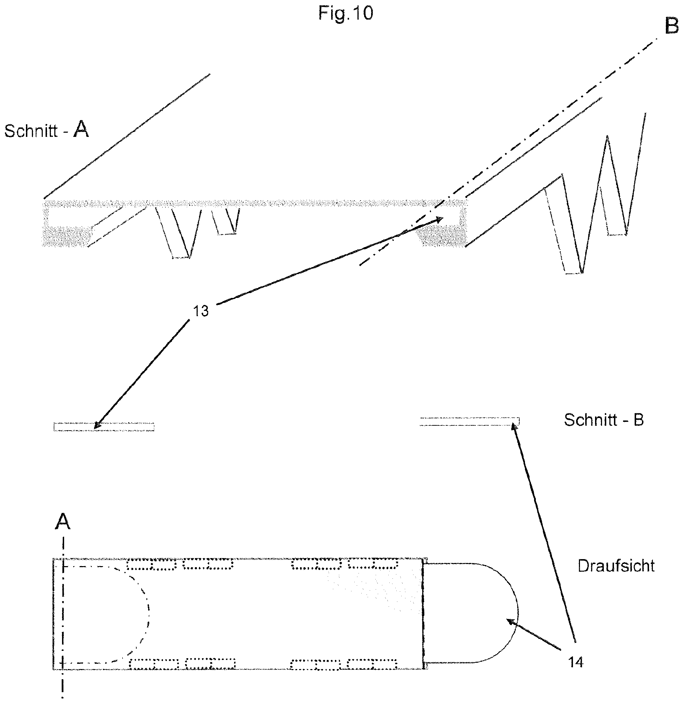

Durch eine bevorzugte Ausführung einer Seite des einschlagbaren Mähkantenelements im Bereich der horizontalen Fläche in Form eines Halbkreises (4) (Fig.1) mit einem größeren Radius können die Mähkantenelemente hintereinander montiert (Fig. 7) und zusammen verbunden werden. Dadurch können mit den einzelnen Mähkantenelementen runde Mähkanten-Bögen unterschiedlicher Ausführung im Garten- und Landschaftsbau für gebogen (Fig. 3) abzugrenzende Flächen realisiert werden, aber auch verschiedene Figuren und Gestaltungselemente hergestellt werden. Um das seitliche Verrutschen der hintereinander eingeschlagenen Mähkantenelemente zu verhindern und um eine formschlüssige Verbindung zu gewährleisten, sind die Mähkantenelemente mit Haltelaschen (5), parallel zur Sichtfläche (3) und mit Längen (L4) zwischen 5 mm und 40 mm, bevorzugt mit Längen zwischen 10 mm und 20 mm, und einer Breite zwischen 10 mm und 100 mm, bevorzugt zwischen 20 mm und 40 mm, ausgeführt (Fig.2). Der Abstand (L5) zwischen der horizontalen Fläche des Mähkantenelements (3) und der Haltelasche (5) beträgt mindestens 1,5 mal die Dicke des Flachmaterials (d1). Am Ende der Längskante des Mähkantenelements befinden sich noch Laschen mit einem kurzem Längsschlitz als Sollbiegestelle, die zur Fixierung des folgenden Mähkantenelements werkzeuglos umgebogen werden können. In einer weiteren Variante werden die polymeren einschlagbaren Mähkantenelemente an einer Seite mit einer dünneren (etwa Hälfte der Dicke der horizontalen Fläche) zungenförmigen Rundung (14) ausgeführt, die dann in die Nuten (13) des nächsten Elements einschoben wird. Eine Ausführungsvariante dieser Verbindung ist in Fig. 10 ("Draufsicht") dargestellt. Für die Realisierung von gebogenen Ausführungen der Mähkante in polymeren Materialien werden die einschlagbaren Mähkantenelemente ebenfalls mit einer Nut-Feder-Variante ausgeführt, wobei das erste Element eine Nut (13) aufweist, in die das nächste Element eingeschoben wird (Fig.10, Schnitt A). In einer anderen Variante kann die Befestigung des eingeschobenen Elements (ohne Nut-Feder-Systems) auch direkt durch Befestigungselemente wie Stift, Schrauben oder Nippel erfolgen. In einer weiteren Variante können die aus polymeren Materialien hergestellten einschlagbaren Mähkantenelemente durch dünnere, mit beidseitig halbrunden Enden ausgeführten Einschubelemente aus polymeren Materialien verbunden werden, die in die seitlichen Nuten (13) der Mähkantenelemente eingeschoben werden. Mit dieser Anordnung können ebenfalls gebogene Strukturen realisiert werden.

### (0006) Breiten/Längen der einschlagbaren Mähkantenelemente und deren Ausformung

Die Breiten (L2) und die Längen (L1) einer bevorzugt ausgeführten einsschlagbaren Mähkantenelemente sowie die Dicken des Flachmaterials (d1) und auch die Längen L4,L5,L6 sind je nach Anwendungszweck und Anforderung an die geometrische Gestaltung der Mähkante variabel ausführbar. Insbesondere werden Breiten (L2) zwischen 50 mm und 350 mm realisiert, bevorzugt zwischen 80mm und 250 mm, und Längen **(L1)** zwischen 100 mm und 2500mm, bevorzugt zwischen 200 mm und 1200 mm . Dadurch kann eine optimale Anpassung der Mähkanten an den Randbereich der Rasenflächen erreicht werden, und somit wird bei Verwendung von Mährobotern oder anderen Mähgeräten sichergestellt, dass die an den Randbereichen größerer Grasflächen stehen bleibenden Grasreste von den Mähgeräten erfasst werden und somit eine Verwendung von Unkrautvernichtungsmitteln (z.B. Glyphosat) oder von Rasentrimmern vermieden wird.

Die einschlagbaren Mähkantenelemente werden in zwei Varianten ausgeführt, entweder mit parallelen Längskanten oder mit leicht trapezförmig zulaufenden Längskanten. Die letztere Ausführung hat den Vorteil, dass die einzelnen einschlagbaren Mähkantenelemente direkt ineinander geschoben werden können und dadurch eine fortlaufende Verlegung mit einander überlappenden Mähkantenelementen ermöglicht wird. Zudem kann auch bei größeren Längen der einschlagbaren Mähkante eine einfache Anpassung an unterschiedliche Geländeformen erreicht werden.

### (0007) Mähfreiraum

Die sich schuppenartig überlappenden Schenkel (Fig.3) der einschlagbaren Mähkantenelemente (Fig.1(3)) bilden eine sich entlang der Grenze zwischen zwei unterschiedlichen Flächenbereichen erstreckende Mähkante, die einen Pflanzen- und/oder Graswuchs auf einem der Breite der Mähkante (L2) entsprechenden Randbereich verhindert und entlang der ein Rasenmäher bewegt werden kann. Für den begrünten Flächenbereich ergibt sich daher ein ansprechendes Erscheinungsbild. Fig.3 zeigt zwei hintereinander gereihte einteilige einschlagbare Mähkantenelemente und deren Verbindung.

### (0008) Material der einschlagbaren Mähkantenelemente

Eine bevorzugte Ausführung der einschlagbaren Mähkantenelemente besteht aus einem metallischen Flachmaterial einer Dicke (d1) zwischen 0,5mm und 4mm, erfindungsgemäß bevorzugt einer Dicke (d1) zwischen 0,8 mm und 2,5 mm, das durch Stanzen, Laser- oder Wasserstrahlschnitt und anschließendes Biegen in die erfindungsgemäße Form gebracht wird. Als Flachmaterial eignet sich dabei ein solches aus beispielsweise Aluminium oder aus Aluminiumlegierungen, Edelstahl, korrosionsbeständige Stählen und/oder aus oberflächenbehandelten Stählen, wobei im letzteren Fall vor allem zusätzliche korrosionsvermeidende Beschichtungen verwendet werden. Feuerverzinkte oder galvanisch verzinkte und lackierte Stahlbleche können ebenso wie definiert oxidierte Stähle (für besondere Farbgebung) verwendet werden. Die einschlagbaren Mähkanten können auch aus anderen Materialien wie z.B. Kunststoffen, thermoplastischen Polymeren oder aus Verbundmaterialien wie z.B. faserverstärkten Polymeren oder anderen Faserverbundwerkstoffen oder metallverstärkten Polymeren bestehen, wobei hier materialbedingt höhere Wandstärken (d1) von bis zu 10 mm notwendig sind und die Längen- sowie Breitendimensionen den unterschiedlichen Anforderungen und zu erwartenden Belastungen angepasst werden.

### (0009) Spitzen, Schlitze und asymmetrische Anker in den vertikalen Bereichen/ in den Eindringkörpern der einschlagbaren Mähkantenelementen

Die Ausführung der Spitzen und der asymmetrischen, tannenförmig ausgebildeten Anker (7) bzw (2) in den vertikalen Schenkeln der Mähkantenelemente wird zur Sicherstellung einer Verletzungsvermeidung entsprechend angepasst. Erfindungsgemäß werden Spitzen vermieden und die Enden der Anker (2) in den Eindringkörpern abgerundet ausgeführt, sodass sowohl bei der Produktion als auch im weiteren Verlauf der Handhabung (Versand, Montage) das Gefährdungspotential minimiert wird.

Die rechteckig, oval oder wellenförmig ausgeführten Schlitze in den tannenbaumförmig asymmetrisch ausgeführten Eindringkörpern in den vertikalen Schenkeln der Mähkantenelemente haben zwei wesentliche Funktionen, sie erhöhen einerseits den Herausziehwiderstand, da Pflanzenwurzeln in die Schlitze eindringen bzw. diese auch durchwachsen können, und sie bilden andererseits die Aufnahmevorrichtung bzw. Steckverbindung für die unter **(0010)** beschriebenen zusätzlich befestigbaren Randleisten, die sowohl als Beetstützrand und als seitliche Stützwand bei hangseitiger Montage der einschlagbaren Mähkanten als auch als Schnecken-/Krötenschutz entlang der montierten Mähkanten dienen können. Die Schlitze in den vertikalen Schenkeln der einschlagbaren Mähkantenelemente sind erfindungsgemäß so ausgeführt, dass sie die in den Anbauteilen angebrachten Verankerungselemente aufnehmen und durch eine werkzeuglose Handhabung diese Elemente durch eine quasi Einschnappverbindung fixiert werden. Die Stabilität der Verbindung wird durch die Ausnutzung der Eigenspannungen von mindestens zweier dieser in den vertikalen Schenkeln der einschlagbaren Mühkantenelementen angeordneten Verankerungsschlitze in Kombination mit den in den Randleisten erfindungsgemäß ausgeführten ankerförmigen und werkzeuglos umbiegbaren Einschubelementen erreicht.

### (0010) Beet-, bzw. Schneckenrandleisten als Anbauteile des einschlagbaren Mähkantenelements

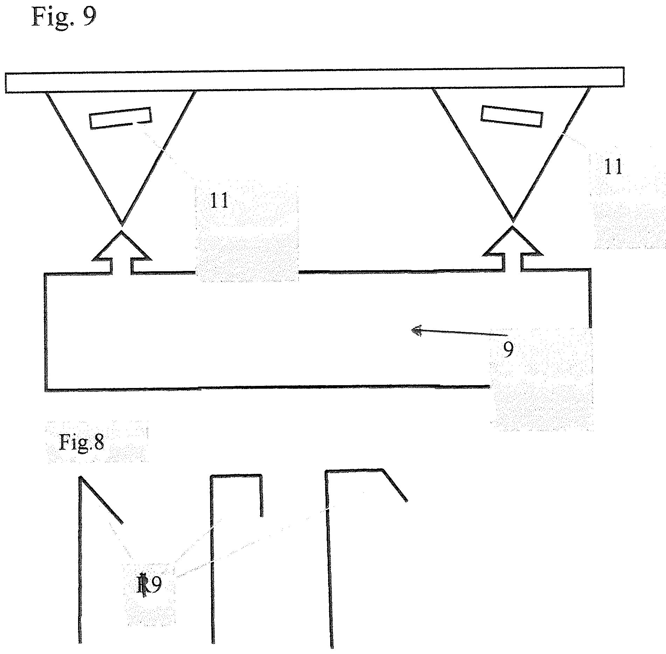

Das einschlagbare Mähkantenelement kann auch mit einer Randleiste (9) (Fig.5) einer Dicke zwischen 0,5 mm und **4mm** und einer Höhe (L7) zwischen 20 mm und **700** mm, bevorzugt zwischen 20 mm und 500 mm, versehen werden, die mittels Schrauben, Bolzen oder mittels eines erfindungsgemäß ausgeführten Stecksystems (9.1) fest mit den vertikalen Schenkeln des Mähkantenelements verbunden wird. Die Steckverbindung wird aus leicht schräg gestellten Schlitzen (11) oder wellenförmigen Ausnehmungen und einrastenden pfeilförmigen, im rechten Winkel von der Randleiste (9) weg gebogenen Verankerungen einer Länge zwischen 8 mm und 30 mm (Fig.9) gebildet, wobei die Verankerungen werkzeuglos durch Umbiegen im vertikalen Schenkel des Mähkantenelements fixiert werden. Erfindungsgemäß werden für die Befestigung mindestens zwei dieser Verankerungselemente gebraucht. Bei längeren Ausführungen der Mähkantenelemente werden mehrere dieser Verankerungselemente realisiert.

Der sich ergebende Vorteil ist, dass Erhöhungen (siehe Fig.5 (Füllmaterial)), wo abzugrenzende Beete oder Flächen höher liegen oder höher angelegt werden, mit einem sauberen Ab- bzw. Anschluss hergestellt werden können, auch wenn dieses Zubehörteil (z.B. Blech) in abgewinkelter Form gebogen ist (Fig. 8) - und hier eine weitere Anwendung als Schneckenschutz ermöglicht wird. Erhöhte Kanten und Varianten mit umgebogenen Kanten allein sind zwar Stand der Technik, eine Anordnung in fester, werkzeuglos herstellbarer Verbindung mit einschlagbaren Mähkantenelementen wurde noch nicht offengelegt.

### (0011) Variable Länge und Abschlussteil der einschlagbaren Mähkante, aufgebaut aus erfindungsgemäßen Möhkantenelementen

Für die Herstellung flexibler Längen mit einer Ausführung der Endstücke (4) bzw. (5) der einschlagbaren Mähkantenelemente wird ein Mähkantenelement in einer um 2x (d1) (Fig.2) vergrößerten Breite (L2) so ausgeführt, dass dieses Endmodul formschlüssig über die bereits eingeschlagene Mähkante gestülpt werden kann (Fig.6+7) und so stufenlos die Länge der Mähkante in der jeweils gewünschten Position (Fig.7 (10.1)) variiert werden kann. Ein sauberer Abschluss der Mähkante (3) kann so ohne zusätzlichen Einsatz eines Werkzeugs erreicht werden. Die Ausführung bei polymeren Materialien der einschlagbaren Mähkantenelemente zur Herstellung beliebiger Längen wurde bereits unter (0005) offengelegt.

### (0012) Mäh-, bzw. Bewuchsfreikante, Nutzung des Innenraumes der einschlagbaren Mähkante, Nutzung von Anbauteilen, Unterbau und Feuchtigkeitsschutz für Aufbauten

Die erfindungsgemäße Ausführung der Mähkante ermöglicht durch ihre Flexibilität viele zusätzliche Anwendungen im Garten- und Landschaftsbau, wie Beetstabilisierung, Schneckenschutz oder Herstellung von Mähfreiräumen im Bereich von Zäunen, Wegen und Zufahrten . Zudem kann im Innenraum der einschlagbaren Mähkante die Montage von für Bewässerungssysteme und Leitsysteme für Mähroboter notwendigen Strom-, Steuer- und Wasserleitungen realisiert werden. Aufgrund der erfindungsgemäßen Ausführung der Mähkante wird ein dauerhafter Schutz vor Beschädigung dieser Leitungen erreicht und zudem eine einfache Wartung ermöglicht.

Der Innenraum der einschlagbaren Mähkante kann erfindungsgemäß für die Versorgungsleitungen unterschiedlicher Medien genutzt werden, wobei im Inneren sowohl an der horizontalen Fläche als auch im oberen Bereich der vertikalen Schenkel Halterungen bzw. Aufnahmeeinrichtungen in Form von Laschen oder Haken angebracht sind. Zudem können im Innenraum der einschlagbaren Mähkante und mit Hilfe der erfindungsgemäßen Halterungen bzw. Aufnahmeeinrichtungen Leuchtmittel und/oder Einrichtungen bzw. Bauteile zur Übertragung und/oder Generierung von elektrischen, akustischen oder optischen Signalen mit den für ihre Versorgung notwendigen Leitungen integriert werden.

Einen zusätzlichen Einsatz kann die einschlagbare Mähkante auch bei der Verlegung von Fertigrasen (auch Kunststoffrasen) als Abschluss der jeweiligen Fläche finden sowie im Zaunbau als unmittelbar unter dem Zaun angeordneter Aufwuchsschutz.

Als eine weitere Anwendung kann die einschlagbare Mähkante als Unterbau und Feuchtigkeitsschutz/Aufwuchshindernis für nichtstationäre Aufbauten genutzt werden, wie z.B. als Unterbau für Hochbeete oder in Bereichen, wo ein Flächendruck verteilt werden soll, wie z.B. bei Gerätehütten, Müllinseln, Stufen oder Sichtschutzvorrichtungen.

Die vertikalen Schenkeln der einschlagbaren Mähkantenelemente können auch länger ausgeführt werden, sodass sie tiefer in das Erdreich eindringen und einen effektiven Schutz gegen ein Untergraben durch Kleintiere wie Maulwürfe, Wühlmäuse etc. bieten. Dies kann auch mit erfindungsgemäß konfektionierten Anbauteilen erreicht werden.

Die Anbauteile können ebenfalls im Inneren der gebogenen Bereiche (R 9) mit Leitungen versehen werden, wobei hier bevorzugt Beleuchtungsvarianten realisiert werden. Bei Verwendung von LED-Lichtbändern werden so unterschiedliche direkte und indirekte Lichteffekte erreicht.

In einer weiteren Variante werden die Anbauteile und die in den vertikalen Schenkeln der Mähkantenelemente eingebrachten Schlitze und Ausnehmungen erfindungsgemäß so ausgeführt, dass die Anbauteile in beiden Richtungen (nach oben oder nach unten schauend) auf den Mähkantenelementen montiert werden können. Dadurch können die Mähkantenelemente auch als Steighilfen, als Stufen, als Wegbefestigungen (z.B. bei Almwegen, auf Wiesen), als leicht verlegbare Stiegen und als Hangbefestigungen eingesetzt werden .

Die Anbauteile werden bei größeren Längen zur Herstellung von Rundungen mit vorgeschlitzten Sollbiegestellen ausgeführt, sodass eine leichte und werkzeuglos durchführbare Anpassung an die von den Mähkanten vorgegebene Anordnung ermöglicht wird.

### (0013) Oberflächenausführung der einschlagbaren Mähkante

Die Beschichtung (Farben, Lacke) und Konfektionierung der Oberfläche der einschlagbaren Mähkante kann dem jeweiligen Verwendungszweck angepasst werden, so kann z.B. die Oberfläche mit einem Kunststoffrasen verklebt werden oder die Oberfläche wird mit einer speziellen Farbgebung für die Herstellung eines Leit- oder Orientierungssystem ausgeführt.

In einer anderen Variante wird die Oberfläche trittsicher oder mit einer den Reibungswert der Oberfläche steigernden Beschichtung versehen. Ebenfalls kann ein vorstrukturiertes Material, z.B. ein Riffelblech nach DIN 59220 oder EN 1386 als Material für die Herstellung der einschlagbaren Mähkante eingesetzt werden bzw. kann durch Oberflächenbehandlung wie Sandstrahlen oder entsprechende Lackierung oder Aufkleben einer reibwertverbessernden Folie die Rutschneigung verringert werden.

### (0014) Bezugszeichenliste (17 Punkte) (2) ankerförmige Ausnehmungen

1) (10) Schenkelflächen,
2) (1), (11) Ausnehmungen (rund, eckig, oval, wellenförmig)
3) (3) Oberfläche Mähkante
4) (4) rundes Ende der Mähkante
5) (5) Lasche bzw. Führung für Verbindung (kreisförmige Gestaltung)
6) (7)Spitze der Verankerungsschenkel
7) (R8) Winkel von 90° +/- 10-15°
8) (R9) Winkel bzw. Ausführungsdetail in Fig.8
9) (L1),(L2),(L3),(L4),(L5),(L6),(L7) Längen
10) (d1) Stärke des Flachmaterials
11) (9) Randleiste gerade (Beetrand) oder gebogen (R9)
12) (9.1) Verbindung zur Mähkante (Schraub-, Niet-, Klebe-, oder Steckverbindung, o.ä.)
13) (12) Mähkanten Endstück verschiebbar
14) (12.1) Verschiebeweg in Längsrichtung (flexible Länge)
15) (12.2) seitlich variable Auslenkung von einer geraden Verlegung der Mähkanten
16) (13) Nut für das Einschieben eines Verbindungselements bei polymerer Ausführung des Mähkantenelements
17) (14) Halbrundes Verbindungselement bei polymerer Ausführung des Mähkantenelements

### (0015) Figurenbeschreibung zur einschlagbaren Mähkante

Fig. 1
   Ansicht der einschlagbaren Mähkante selbst (Schrägansicht); gut sichtbar die Ausnehmungen zur Verankerung im Boden; vorne abgerundet, um die einzelnen Mähkanten selbst zu verbinden und Rundungen je nach Verlauf des Geländes umsetzen zu können.
Fig.2
   Querschnitt einer Mähkante; parallel zueinander stehende abgewinkelte Schenkel(10); Haltelasche (5) für die Steckverbindung bei mehreren hintereinander verbundenen einschlagbaren Mähkanten; Längenbezug variabel (L2) je nach Breite des Mähfreiraumes;
Fig.3
   Draufsicht zweier hintereinander zusammengesteckter Mähkanten
Fig.4
   Seitenansicht einer einschlagbaren Mähkante; zeigt Zubehörteile (9) wie eine erhöhte Beetumrandung oder Ausführung als Schneckenschutz
Fig.5
   Querschnitt einer Mähkante mit Zubehörteil (9) zzgl. die Verbindung zur Mähkante (9.1) (Steck-, Niet-, Bolzen- oder Schraubverbindung; kann auch geklebt bzw. geschweißt ausgeführt sein) mit (L7) sowie Ausführungsvarianten (R9) (gerade oder gewinkelt, siehe Fig.8).
Fig.6
   Seitenansicht der einschlagbaren Mähkante; zeigt die verschiebbare Mähkante ausgeführt als Mähkantenendstück (12), horizontale Breite 2xd1 + L2.
Fig.7
   Mähkanten; zeigt die Längs- 12.1 Draufsicht von mehreren einschlagbaren und Seitenflexibilität 12.2 von mehreren hintereinander montierten Mähkanten.
Fig.8
   Unterschiedliche Ausführungen von Zubehörteil (9) als z.B. Schneckenschutz
Fig.9
   Schematische Darstellung der Steckverbindung zwischen Mähkante (3) und Zubehörteil (9) über schräggestellte rechteckförmige Schlitze (11) in den vertikalen Bereichen (2) der Mähkante
Fig. 10
   Darstellung der Ausführung des einschlagbaren Mähkantenelements aus polymeren Materialien mit Nuten (13) und halbrunden Einschubteilen (14)

## Patentansprüche

1. Einschlagbares, einteiliges, in variablen Längen ausführbares Mähkantenelement (3) mit einem rechteckigen, an der unteren Seite offenen Querschnitt, hergestellt aus einem korrosionsbeständigen Flachmaterial, wobei die Längskanten parallel oder trapezförmig zulaufend ausgeführt sind, und die horizontale Fläche einseitig halbrund ausgeführt ist,
**dadurch gekennzeichnet,**
**dass** sich an den vertikalen Teilen des Mähkantenelements an einem Ende werkzeuglos umbiegbare dreiecksförmige Haltelaschen (5) zur Befestigung des nächsten Mähkantenelements befinden, dass sich ebenso unterschiedlich ausgeformte Ausnehmungen, insbesondere Schlitze, zur Aufnahme von Befestigungselementen für Anbauteile befinden, und dass an den zur Verankerung im Boden dienenden Schenkelflächen Zacken und Widerhaken angebracht sind.

2. Einschlagbares Mähkantenelement nach Anspruch 1, **dadurch gekennzeichnet, dass** als Abschlussteil einer Mähkante ein Mähkantenelement in einer Breite von (L2)+2x(d₁), der Dicke (d₁) des Materials, ausgeführt wird und dieses über ein weiteres Mähkantenelement stülpbar und stufenlos in Längsrichtung verschiebbar ist, wobei insbesondere ein metallisches Flachmaterial mit Dicken (d₁) zwischen 0,50 mm und 4,00 mm eingesetzt wird, bevorzugt mit Dicken zwischen 0,80 mm und 2,50 mm.

3. Einschlagbares Mähkantenelement nach den Ansprüchen 1 und 2, **dadurch gekennzeichnet, dass** die Schenkelflächen vertikal und/oder tannenbaumförmig asymmetrisch ausgeführt sind, in einer Länge zwischen 30,00 mm und 150,00 mm, bevorzugt zwischen 45,00 mm und 55,00 mm, und zumindest zwei oder mehrere runde, schlitzförmige, wellenförmige oder eckige Ausnehmungen zur Anpassung an die jeweiligen Bodenverhältnisse und Bewuchssituationen aufweisen.

4. Einschlagbares Mähkantenelement nach den Ansprüchen 1 bis 3, **dadurch gekennzeichnet, dass** eine Seite des Mähkantenelements konkav oder kurvenförmig mit den Haltelaschen (5) mit einer Länge (L₄) zwischen 5,00 mm und 40,00 mm, bevorzugt zwischen 10,00 mm und 20,00 mm, und einer Breite zwischen 10,00 mm und 50,00 mm, bevorzugt zwischen 15,00 mm und 30,00 mm, und entsprechenden Öffnungen ausgestaltet ist, zwecks formschlüssiger, flexibler und fluchtender oder nichtfluchtender Anordnung des folgenden Mähkantenelements zur Herstellung von runden bzw. gebogenen Elementanordnungen oder Figuren.

5. Einschlagbares Mähkantenelement nach den Ansprüchen 1 bis 4, **dadurch gekennzeichnet, dass** Breiten und Längen des einschlagbaren Mähkantenelements je nach Anwendung variabel ausgeführt werden, um die Dimensionen des Mähkantenelements den Anforderungen beim Einsatz von Mährobotern oder anderen Mähgeräten anzupassen, wobei insbesondere Breiten des Mähkantenelements zwischen 50,00 mm und 350,00 mm realisiert sind, bevorzugt Breiten zwischen 80,00 mm und 250,00 mm, und Längen zwischen 500,00 mm und 1500,00 mm, bevorzugt zwischen 800,00 mm und 1200,00 mm realisiert werden.

6. Einschlagbares Mähkantenelement nach den Ansprüchen 1 bis 5, **dadurch gekennzeichnet, dass** als Flachmaterialien Metalle wie Aluminium oder Aluminiumlegierungen, verzinkte Stahlbleche, lackierte Stahlbleche, Edelstahlbleche, Stahlbleche mit definierten Oxidschichten, Stahlbleche mit unterschiedlichen Farben, Polymere wie Thermoplaste, faserverstärkte Polymere oder andere faserverstärkte Materialien eingesetzt werden.

7. Einschlagbares Mähkantenelement nach den Ansprüchen 1 bis 6, **dadurch gekennzeichnet, dass** die horizontale Fläche des Mähkantenelements mit einer trittsicheren oder den Reibungswert steigernden Oberfläche ausgestaltet ist.

8. Einschlagbares Mähkantenelement nach den Ansprüchen 1 bis 7, **dadurch gekennzeichnet, dass** sich im inneren Bereich des Mähkantenelements unterschiedlich ausgeführte Halterungen für die Verlegung von Medienleitungen und Kabeln befinden, und/oder
dass an der Innenseite des Mähkantenelements an der horizontalen Fläche oder im oberen Bereich der vertikalen Schenkel Ausnehmungen und Aufnahmeeinrichtungen für Leuchtmittel und/oder für Einrichtungen zur Übertragung und/oder Generierung von elektrischen oder optischen Signalen angebracht sind, und/oder
dass im inneren Bereich des Mähkantenelements Leuchtmittel und/oder Signalgeneratoren und/oder Steuerungseinrichtungen für elektrische und/oder optische Signale angebracht sind, und/oder
dass die horizontale Oberseite des Mähkantenelements eine Vielzahl von Durchbrüchen bzw. Ausnehmungen wie Löcher, Quadrate oder Rechtecke aufweist und diese Durchbrüche z.B. zum Einsetzen von Leuchtmitteln oder anderen Signalgeneratoren genutzt werden können.

9. Einschlagbares Mähkantenelement nach den Ansprüchen 1 bis 8, **dadurch gekennzeichnet, dass** der Rücken / die Oberseite des Mähkantenelements Sicken bzw. die Unterseite im Inneren des Mähkantenelements zusätzlich dauerhaft angebrachte Versteifungen in Form von zusätzlichen Blechstreifen oder Profilelementen zur Verbesserung der Biege- und Torsionssteifigkeit der Mähkante aufweist.

10. Mähkantensystem mit einem einschlagbaren Mähkantenelement nach den Ansprüchen 1 bis 9, **dadurch gekennzeichnet, dass** an einer Seite des Mähkantenelements eine Randleiste (9) einer Dicke zwischen 0,50 mm und 4,00 mm, und einer Höhe zwischen 20,00 mm und 400,00 mm, bevorzugt zwischen 50,00 mm und 300,00 mm, mittels einer Steck-, Schraub-, Bolzen-, Niet-, oder Klebeverbindung (9.1) entweder nach oben oder nach unten gerichtet befestigt ist.

11. Mähkantensystem nach Anspruch 10, **dadurch gekennzeichnet, dass** die an einer Seite des Mähkantenelements anbringbare Randleiste (9) mittels einer Steckverbindung befestigt ist, gebildet aus mindestens zwei leicht schräg gestellten wellenförmig, mit einer geringfügigen Abweichung von der Parallelität ausgeführten Schlitzen (11), deren Breite der Dicke der Randleiste (9) entspricht, und einrastenden pfeil- oder keilförmig ausgeführten, im rechten Winkel von der Randleiste (9) weggebogenen Verankerungen einer Länge zwischen 8,00 mm und 30,00 mm, die werkzeuglos zu einer verbesserten Halterung im Inneren des Mähkantenelements parallel zum vertikalen Schenkel des Mähkantenelements gebogen werden.

12. Mähkantensystem nach Anspruch 10 oder 11, **dadurch gekennzeichnet, dass** die angebrachte Randleiste aus Materialien wie Aluminium, Aluminiumlegierungen, verzinktes Stahlblech, lackiertes Stahlblech, Edelstahlblech, Stahlblech mit definierten Oxidschichten, Polymeren, faserverstärkten Polymeren, metallverstärkten Polymeren oder anderen faserverstärkten Produkten gefertigt ist.

13. Verwendung eines einschlagbaren Mähkantenelements gemäß einem der Ansprüche 1-9 zur Herstellung von längeren Mähkanten oder Mähkantenanordnungen, zur Nutzung als gewichtsverteilende Unterlage für nicht standortfeste gewichtsintensive Einrichtungen wie Hochbeete, Gerätehütten oder Großpflanzen.

14. Verwendung eines Mähkantensystems gemäß einem der Ansprüche 10-12, **dadurch gekennzeichnet, dass** das Mähkantenelement in Kombination mit der Randleiste (9) als beleuchtetes Hinweiselement, als Leuchtmittel, als Wildreflektor und als Halterung für unterschiedliche Versorgungsleitungen und/oder
als Hindernis für die Fortbewegung von Kriech- und Kleintieren genutzt wird, und/oder
als Hangschutz, zur Hangbefestigung, zur Befestigung von Kies oder von Ziermaterial, als Steighilfe, zur Befestigung von Stufen, zur flexiblen Herstellung von Stiegen und Stufen und zur Ausbildung von Steigen genutzt wird.

## Claims

1. One-piece landscape border element (3) which can be driven into the ground, which can be made in variable lengths, having a rectangular cross-section open on the underside, made of a corrosion-resistant flat material, wherein the longitudinal edges are parallel or taper in a trapezoidal shape, and the horizontal surface is semi-circular on one side,
**characterised in that**
there are triangular retaining lugs (5) that can be bent on one end without tools on the vertical parts of the landscape border element, for the purpose of fastening the subsequent landscape border element, **in that** there are also differently shaped recesses, in particular slots, for receiving fastening elements for add-on parts, and **in that** prongs and barbs are attached to the leg surfaces used for anchoring in the ground.

2. Landscape border element which can be driven into the ground according to claim 1, **characterised in that** a landscape border element with a width of (L2)+2x(di), the thickness (d₁) of the material, is designed as the end part of a landscape border, and can be slipped over another landscape border element, and is continuously displaceable in the longitudinal direction, wherein in particular a metallic flat material with a thickness (d₁) between 0.50 mm and 4.00 mm is used, preferably with a thickness between 0.80 mm and 2.50 mm.

3. Landscape border element which can be driven into the ground according to claims 1 and 2, **characterised in that** the leg surfaces are vertical and/or asymmetrical in the shape of a Christmas tree, with a length of between 30.00 mm and 150.00 mm, preferably between 45.00 mm and 55.00 mm, and have at least two or more round, slit-shaped, wavy or angular recesses for adaptation to the given soil conditions and vegetation.

4. Landscape border element which can be driven into the ground according to claims 1 to 3, **characterised in that** one side of the landscape border element is concave or curved, with the retaining lugs (5) with a length (L₄) between 5.00 mm and 40.00 mm, preferably between 10.00 mm and 20.00 mm, and a width between 10.00 mm and 50.00 mm, preferably between 15.00 mm and 30.00 mm, and with corresponding openings, for the purpose of creating a positive, flexible and flush or non-flush arrangement of the subsequent landscape border element to produce round and/or curved element arrangements or figures.

5. Landscape border element which can be driven into the ground according to claims 1 to 4, **characterised in that** the widths and lengths of the landscape border element which can be driven into the ground are designed to be variable depending on the application, in order to adapt the dimensions of the landscape border element to requirements when mowing robots or other mowing devices are used, wherein the widths of the landscape border element are between 50.00 mm and 350.00 mm, preferably between 80.00 mm and 250.00 mm, and the lengths are between 500.00 mm and 1500.00 mm, preferably between 800.00 mm and 1200.00 mm.

6. Landscape border element which can be driven into the ground according to claims 1 to 5, **characterised in that** metals such as aluminium or aluminium alloys, galvanised steel sheets, painted steel sheets, stainless steel sheets, steel sheets with defined oxide layers, steel sheets with different colours, polymers such as thermoplastics, fibre-reinforced polymers, or other fibre-reinforced materials are used as flat materials.

7. Landscape border element which can be driven into the ground according to claims 1 to 6, **characterised in that** the horizontal surface of the landscape border element is designed with a non-slip surface or a surface that increases the coefficient of friction.

8. Landscape border element which can be driven into the ground according to claims 1 to 7, **characterised in that** differently designed holders for laying media lines and cables are located in the inner region of the landscape border element, and/or
**in that**, on the inside of the landscape border element on the horizontal surface or in the upper region of the vertical legs, there are recesses and receiving devices for lights and/or for devices for the transmission and/or generation of electrical or optical signals, and/or **in that**, in the inner region of the landscape border element, lights and/or signal generators and/or control devices for electrical and/or optical signals are attached, and/or
**in that** the horizontal upper side of the landscape border element has a plurality of passages and/or recesses such as holes, squares, or rectangles, and these passages can be used, for example, for the insertion of lights or other signal generators.

9. Landscape border element which can be driven into the ground according to claims 1 to 8, **characterised in that** the back/upper side of the landscape border element has beads and/or the underside inside the landscape border element has additional permanently attached reinforcements in the form of additional sheet metal strips or profile elements to improve the bending resistance and torsional rigidity of the landscape border.

10. Landscape border system having a landscape border element which can be driven into the ground according to claims 1 to 9, **characterised in that**, on one side of the landscape border element, an edge strip (9) with a thickness of between 0.50 mm and 4.00 mm and a height of between 20.00 mm and 400.00 mm, preferably between 50.00 mm and 300.00 mm, is attached by means of a plug-in, screw, bolt, rivet or adhesive connection (9.1) oriented either upwards or downwards.

11. Landscape border system according to claim 10, **characterised in that** the edge strip (9) which can be attached to one side of the landscape border element is fastened by means of a plug-in connection, formed from at least two slightly inclined, wavy slots (11) which are designed with a slight deviation from parallelism, the width of which corresponds to the thickness of the edge strip (9), and latching, arrow-shaped or wedge-shaped anchors bent away from the edge strip (9) at right angles, with a length of between 8.00 mm and 30.00 mm, which can be bent without tools for improved retention inside the landscape border element parallel to the vertical leg of the landscape border element.

12. Landscape border system according to claim 10 or 11, **characterised in that** the attached edge strip is made of materials such as aluminium, aluminium alloys, galvanised steel sheet, painted steel sheet, stainless steel sheet, steel sheet with defined oxide layers, polymers, fibre-reinforced polymers, metal-reinforced polymers or other fibre-reinforced products.

13. Use of a landscape border element which can be driven into the ground according to any of claims 1-9 for the production of longer landscape borders or landscape border arrangements, for use as a weight-distributing base for non-stationary, weight-intensive facilities such as raised beds, tool sheds or large plants.

14. Use of a landscape border system according to any of claims 10-12, **characterised in that** the landscape border element in combination with the edge strip (9) is used as an illuminated information element, as a light source, as a game reflector, and as a holder for different supply lines, and/or
as an obstacle to the propagation of crawling and small animals, and/or
as a slope protection, for slope stabilization, for fixing gravel or ornamental material, as a climbing aid, for fixing steps, for the flexible production of stairs and steps and for the formation of boxes.

## Revendications

1. Elément de bordure de jardin enfonçable (3) d'une seule pièce, réalisable en longueurs variables, ayant une section transversale rectangulaire, ouverte sur le côté inférieur, réalisé en un matériau plat résistant à la corrosion, dans lequel les bords longitudinaux sont parallèles ou de forme trapézoïdale, et la surface horizontale est semi-circulaire d'un côté,
**caractérisé en ce que**,
des pattes de retenue triangulaires (5) pouvant être pliées sans outil se trouvent sur les parties verticales de l'élément de bordure de jardin à une extrémité, pour la fixation de l'élément de bordure de jardin suivant, ainsi que des évidements de formes différentes, en particulier des fentes, pour recevoir des éléments de fixation pour des accessoires et **en ce que** les surfaces des branches servant à l'ancrage au sol sont pourvues de dents et de barbillons.

2. Elément de bordure de jardin enfonçable selon la revendication 1, **caractérisé en ce qu'**un élément de bordure de jardin, en tant que partie terminale d'une bordure de jardin, est réalisé avec une largeur (L2)+2x(d₁), d'épaisseur (d₁) du matériau, et celui-ci est emboîtable et coulissable dans la direction longitudinale sur un autre élément de bordure de jardin, en particulier un matériau métallique plat d'épaisseur (d₁) entre 0,50 mm et 4,00 mm étant utilisé, de préférence avec des épaisseurs entre 0,80 mm et 2,50 mm.

3. Elément de bordure de jardin enfonçable selon les revendications 1 et 2, **caractérisé en ce que** les surfaces de branche sont réalisées de manière asymétrique verticalement et/ou en forme de sapin, sur une longueur comprise entre 30,00 mm et 150,00 mm, de préférence entre 45,00 mm et 55,00 mm, et présentant au moins deux ou plusieurs évidements ronds, en forme de fentes, ondulés ou angulaires pour s'adapter aux conditions de sol et aux situations de végétation.

4. Elément de bordure de jardin enfonçable selon les revendications 1 à 3, **caractérisé en ce qu'**un côté de l'élément de bordure de jardin est concave ou de forme courbe avec les pattes de retenue (5) d'une longueur (L₄) comprise entre 5,00 mm et 40,00 mm, de préférence entre 10,00 mm et 20,00 mm, et une largeur entre 10,00 mm et 50,00 mm, de préférence entre 15,00 mm et 30,00 mm, et comporte des orifices correspondants, pour une disposition avec emboîtement, flexible, alignée ou non de l'élément de bordure de jardin suivant pour la fabrication d'ensembles d'éléments ou figures, ronds ou courbés.

5. Elément de bordure de jardin enfonçable selon les revendications 1 à 4, **caractérisé en ce que** les largeurs et les longueurs de la bordure de jardin enfonçable sont réalisées de manière variable selon l'utilisation, pour adapter les dimensions de l'élément de bordure de jardin aux besoins de l'utilisation de robots de tonte ou d'autres équipements de tonte, dans lequel en particulier les largeurs de l'élément de bordure de jardin sont entre 50,00 mm et 350,00 mm, de préférence des largeurs entre 80,00 mm et 250,00 mm, et des longueurs entre 500,00 mm et 1 500,00 mm, de préférence entre 800,00 mm et 1 200,00 mm.

6. Elément de bordure de jardin enfonçable selon les revendications 1 à 5, **caractérisé en ce qu'**on utilise comme matériaux plats des métaux tels que l'aluminium ou des alliages d'aluminium, des tôles d'acier galvanisées, des tôles d'acier vernies, des tôles d'acier inoxydable, des tôles d'acier avec des couches d'oxyde définies, les tôles d'acier de différentes couleurs, les polymères tels que les thermoplastiques, les polymères renforcés de fibres ou d'autres matériaux renforcés de fibres.

7. Elément de bordure de jardin enfonçable selon les revendications 1 à 6, **caractérisé en ce que** la surface horizontale de l'élément de bordure de jardin est réalisée avec une surface antidérapante ou augmentant la valeur de frottement.

8. Elément de bordure de jardin enfonçable selon les revendications 1 à 7, **caractérisé en ce qu'**il est prévu dans la zone intérieure de l'élément de bordure de jardin des supports de pose de conduites de fluide et de câbles de manière différente, et/ou
**en ce que**, sur le côté intérieur de l'élément de bordure de jardin sur la face horizontale ou dans la partie supérieure des branches verticales, sont disposés des évidements et des logements pour des moyens d'éclairage et/ou pour des dispositifs de transmission et/ou de génération de signaux électriques ou optiques sont fixés, et/ou que sont disposés des moyens d'éclairage et/ou des générateurs de signaux et/ou des dispositifs de commande de signaux électriques et/ou optiques, à l'intérieur de l'élément de bordure de jardin, et/ou
**en ce que** la partie supérieure horizontale de l'élément de bordure de jardin présente une pluralité de percements ou d'évidements tels que des trous, des carrés ou des rectangles et que ces percements peuvent être utilisés, par exemple, pour l'insertion de sources lumineuses ou d'autres générateurs de signaux.

9. Elément de bordure de jardin enfonçable selon les revendications 1 à 8, **caractérisé en ce que** le dos / la face supérieure de l'élément de bordure de jardin présente des moulures ou que la face inférieure, à l'intérieur de l'élément de bordure de jardin, présente également des renforts permanents sous forme de bandes de tôle supplémentaires ou des éléments profilés pour améliorer la rigidité en flexion et en torsion de la bordure de jardin.

10. Système de bordure de jardin avec un élément de bordure de jardin enfonçable selon les revendications 1 à 9, **caractérisé en ce que** sur un côté de l'élément de bordure de jardin, un rebord (9) d'une épaisseur entre 0,50 mm et 4,00 mm et d'une hauteur entre 20,00 mm et 400,00 mm, de préférence entre 50,00 mm et 300,00 mm, est fixé soit vers le haut soit vers le bas au moyen d'une liaison enfichable, vissée, boulonnée, rivetée ou collée (9.1).

11. Système de bordure de jardin selon la revendication 10, **caractérisé en ce que** le rebord (9) pouvant être fixé sur un côté de l'élément de bordure de jardin est fixé au moyen d'une liaison par enfichage formée d'au moins deux ondulations légèrement inclinées, avec un léger écart par rapport au parallélisme des fentes (11), dont la largeur correspond à l'épaisseur du rebord (9) et des encoches en forme de flèche ou de coin des ancrages coudés perpendiculairement au rebord (9) d'une longueur entre 8,00 mm et 30,00 mm, qui sont courbés sans outil pour un support amélioré à l'intérieur de l'élément de bordure de jardin parallèlement à la branche verticale de l'élément de bordure de jardin.

12. Système de bordure de jardin selon la revendication 10 ou 11, **caractérisé en ce que** le rebord fixé est constitué de matériaux tels que aluminium, alliages d'aluminium, tôle d'acier galvanisée, tôle d'acier laquée, tôle d'acier inoxydable, tôle d'acier avec des couches d'oxyde définies, polymères, polymères renforcés par des fibres, polymères renforcés par des métaux ou d'autres produits renforcés par des fibres.

13. Utilisation d'un élément de bordure de jardin enfonçable selon l'une des revendications 1 à 9 pour la fabrication de bordures de jardin ou d'ensembles de bordures de jardin plus longues, pour l'utilisation en tant que support de répartition de poids pour des installations lourdes non fixes telles que plates-bandes surélevées, cabanes ou plantes de grande taille.

14. Utilisation d'un système de bordure de jardin selon l'une des revendications 10 à 12, **caractérisée en ce que** l'élément de bordure de jardin en combinaison avec le rebord (9) est utilisé comme élément d'indication éclairé, comme source lumineuse, comme réflecteur anti-gibier et comme support pour différentes conduites d'alimentation et/ou
comme obstacle au déplacement des animaux rampants et des petits animaux, et/ou
comme protection contre l'érosion, pour la fixation des pentes, pour la fixation du gravier ou du matériel décoratif, comme aide à la montée, pour la fixation des marches, pour la fabrication flexible des escaliers et des marches et pour la formation des marches.
